# EUROPÄISCHE PATENTANMELDUNG

(11) **EP 1 312 904 A1**
(43) Veröffentlichungstag der Anmeldung: **21.05.2003**
(21) Anmeldenummer: 02023329.2
(22) Anmeldetag: 18.10.2002
(51) Int. Cl.: G01K 1/14

(54) **Einrichtung zur Temperatur-Messkontrolle im Spülbehälter einer Geschirrspülmaschine**

(30) Priorität: 20.11.2001 DE 10156559
(71) Anmelder: Miele & Cie. GmbH & Co., D-33332 Gütersloh (DE)
(72) Erfinder: Anstett, Harald, 33689 Bielefeld (DE); Heitmann, Michael, 33739 Bielefeld (DE)

(57) **Zusammenfassung**

Der Gegenstand der Erfindung betrifft eine Einrichtung (6) zur Temperatur-Messkontrolle im Spülbehälter (4) einer Geschirrspülmaschine (1), welche einen oder mehrere Spülguteinsätze (2, 3) oder Geschirrkörbe im türverschließbaren Spülbehälter (4) aufweist. Erfindungsgemäß ist dabei der Spülbehälter (4) mit einem aus dem Gerät (1) herausgeführten separaten Sondenkanal (7) versehen, über welchen Mess-Sondenleitungen (9) in den Behälter (4) einschiebbar sind. Hierdurch ist es einfach möglich, Kontrollmessungen sowohl bei geschlossener als auch bei geöffneter Gerätetür (11) durchzuführen. Auch mehradrige dickere Sensorkabel können problemlos von außerhalb des Gerätes (1) in den Spülraum (4) eingeführt werden.

## Beschreibung

Der Gegenstand der Erfindung betrifft eine Einrichtung zur Temperatur-Messkontrolle im Spülbehälter einer Geschirrspülmaschine, welche einen oder mehrere Spülguteinsätze oder Geschirrkörbe im türverschließbaren Spülbehälter aufweist.

Bei programmgesteuerten Geschirrspülmaschinen, insbesondere aber bei Spülautomaten für Labor und Krankenhäuser, die mit temperaturabhängigen Sonderprogrammen, wie Desinfektionsprogramme oder dergl. zur Aufbereitung von medizinischem Spülgut arbeiten, ist es ein gesetzliches Erfordernis, dass jeder Spülautomat, z. B. ein Thermodesinfektor, in regelmäßigen Zeitintervallen auf Erreichen der notwendigen Desinfektionstemperatur kontrolliert wird. Hierzu sind mit einem unabhängigen Messsystem Temperaturmessungen an mehreren Stellen im Spülraum durchzuführen. Dabei werden ggf. bis zu 5 Sensoren durch eine spezielle Messöffnung in den Spülraum eingebracht. Die beispielsweise als NTC-Fühler und/oder PT100 Elemente ausgebildeten Sonden besitzen Mess-Sondenleitungen aus nicht isolierten Drähten von 0,5 mm Durchmesser, die ca. 1. m lang sind, bzw. isolierte Kabel.

Zur Durchführung der Kontrollmessungen ist es bekannt, die Mess-Sondenleitungen durch den Türspalt zwischen Gerätetür und Spülraumdichtung oder Türdichtung zu verlegen. Eine derartige Leitungsverlegung ist jedoch bei dicken Sensorkabeln sehr problemvoll. Weil eine Temperatur-Messkontrolle im Spülbehälter nur bei geschlossener Gerätetür durchgeführt werden kann, wird die Türdichtung durch die geklemmten Leitungen teilweise so stark deformiert, dass Undichtigkeiten auftreten. Auch eine separate Messöffnung in der Gerätetür hätte den Nachteil, dass sich beim Schließen der Tür die freiliegenden Kabel unkontrolliert im Spülraum bewegen und ggf. in den Drehbereich der korbzugeordneten Sprüharme gelangen und diese blockieren. Auch hier soll die Erfindung Abhilfe schaffen.

Der Erfindung stellt sich somit das Problem, eine einfache Möglichkeit zur Temperatur-Messkontrolle im Spülbehälter anzugeben, bei welcher die Leitungsführung der Mess-Sondenleitungen vereinfacht und keinen störenden Einfluss auf die Gerätefunktion nimmt und Undichtheiten der Tür- und/oder Spülraumdichtungen sicher vermieden werden.

Erfindungsgemäß wird dieses Problem bei einer Einrichtung zur Temperatur-Messkontrolle mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile sind insbesondere in der einfachen Verlegung der Mess-Sondenleitungen zum Spülbehälter hin zu sehen. Dies erfolgt durch einen separaten Sondenkanal, wobei die Türdichtungen und dergl. vorteilhaft umgangen werden. Das Einführen der Leitungen in den Spülbehälter ist sowohl bei geschlossener als auch bei geöffneter Gerätetür möglich. Auch mehradrige dickere Sensorkabel können problemlos von außerhalb des Gerätes in den Spülraum eingeführt werden. Die in den Spülbehälter durch den Sondenkanal eingeführten Messleitungen samt Sonden richten sich dabei im Behälter vorteilhaft senkrecht aus und können bei geöffneter Gerätetür gezielt und sicher im Behälter verlegt und an den Spülguteinsätzen in verschiedenen Höhenlagen wie gefordert fixiert werden. Dabei kann die Leitungsverlegung sicher und problemlos so erfolgen, dass ein Blockieren der Sprüharme gänzlich ausgeschaltet ist. Weil ferner die Gerätetür keinen Einfluss auf die Leitungsverlegung nehmen kann, sind Deformationen der Türdichtung und daraus resultierende Undichtigkeiten des Spülraumes ausgeschlossen. Bei Einbau- oder Unterbaugeräten ergibt sich durch die erfindungsgemäße Anordnung des Sondenkanals im Frontbereich des Gerätes und außerhalb der Gerätetür der Vorteil, dass die Spülmaschine eingebaut in der Nische verbleiben kann. Auch tritt durch die nach außen hin durch die geschlossene Gerätetür praktisch nicht sichtbare Anordnung des Sondenkanals eine Beeinträchtigung des Gerätedesigns nicht auf.

Ein Ausführungsbeispiel der Erfindung ist in den Zeichnungen rein schematisch dargestellt und wird nachfolgend näher beschrieben. Es zeigt
- Figur 1: eine Geschirrspülmaschine in der Seitenansicht in schematischer Darstellung, mit einer Einrichtung zur Temperatur-Messkontrolle,
- Figur 2: einen Teilschnitt durch die Geschirrspülmaschine mit der Einrichtung zur Temperatur-Messkontrolle in vergrößerter Darstellung.

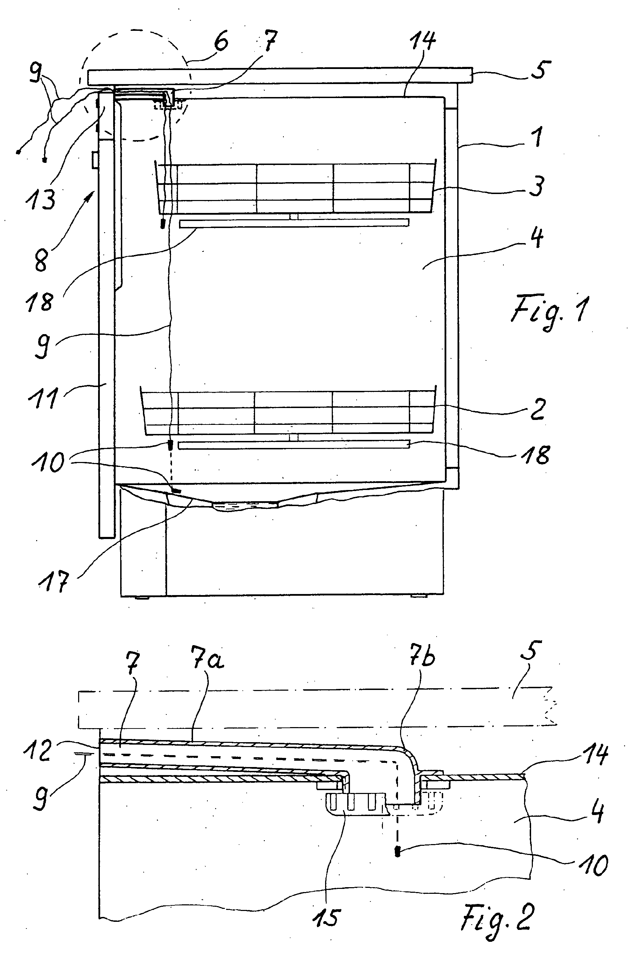

Die Fig 1 zeigt eine programmgesteuerte Geschirrspülmaschine (1), insbesondere einen im Labor- oder Krankenhausbereich eingesetzten Spülautomaten, der mit temperaturabhängigen Sonder-Spülprogrammen, wie Desinfektionsprogrammen oder dergl. zur Aufbereitung von medizinischem Spülgut ausgestattet ist. Die Geschirrspülmaschine (1) weist zur Aufnahme des zu reinigenden Geschirrs zwei Spülguteinsätze (2, 3) oder Geschirrkörbe in unterschiedlichen Spülebenen im türverschließbaren Spülbehälter (4) auf und ist oberseitig von einem Gerätedeckel (5) abgedeckt, welcher bei eingebautem Gerät auch eine Arbeitsplatte sein kann.

Um den gesetzlichen Bestimmungen hinsichtlich regelmäßig durchzuführender Kontroll-Temperaturmessungen im Spülbehälter (4) zu genügen, ist die Geschirrspülmaschine (1) mit einer Einrichtung (6) zur Temperatur-Messkontrolle ausgestattet, welche erfindungsgemäß durch einen Sondenkanal (7) gebildet ist, der vom Inneren des Spülbehälters (4) ausgehend aus dem Behälter heraus nach außen bis in den Frontbereich der Geschirrspülmaschine (1) gelegt ist. Durch diesen als Durchführungskanal für Mess-Sondenleitungen (9) ausgebildeten Sondenkanal (7) können durch die besondere rechteckige Querschnittsausbildung wenigstens bis zu fünf Mess-Sondenleitungen (9) samt Sonden (10) von der Frontseite (8) des Gerätes aus hindurchgeschoben und danach bequem bei geöffneter Gerätetür (11) im Spülbehälter (4) für die Kontrollmessungen sicher fixiert werden. Die Lage der erfindungsgemäßen Einrichtung (6) im Gerät ist gemäß Fig. 1 durch einen Kreis markiert. Die Fig. 2 zeigt die Einrichtung (6) in vergrößerter Darstellung.

Der im ersten Abschnitt (Kanalteil 7a) gerade geführte Sondenkanal (7) mündet von der Frontseite (8) der Geschirrspülmaschine (1) ausgehend vorzugsweise oben in den Spülbehälter (4) abgewinkelt (zweites Kanalteil 7b) ein. Dabei ist die vorderseitige für das Einschieben der Sondenleitungen (9) notwendige Messöffnung (12) des Sondenkanals (7) in den oberen Gerätetürbereich über der Türdichtung an der Gerätefront zugänglich ausgebildet. Zweckmäßig ist die Messöffnung (12) des Sondenkanals (7) im Gerätetürbereich dicht unterhalb des Gerätedeckels (5) vorgesehen und hierdurch sowie durch die obere Türkante (13) teilverdeckt von außen kaum sichtbar.

Wie in der vergrößerten Schnittdarstellung gemäß Fig. 2 gezeigt, ist der gewinkelte Sondenkanal (7) als Durchführungskanal für die Mess-Sondenleitungen (9) mit großem Öffnungs-/Durchgangsquerschnitt ausgebildet. Diese Anordnung ermöglicht das problemlose Einführen der Sondenleitungen (9) in den Spülbehälter (4) sowie eine vorteilhaft senkrechte Ausrichtung der Leitungen im Spülbehälter (4).

Zur einfachen Montage im Gerät ist der Sondenkanal (7) im Deckenwandteil (14) des Spülbehälters (4) vorzugsweise lösbar festgesetzt, wobei das abgewinkelte Ende (Kanalteil 7b) durch einen Durchbruch im Deckenwandteil (14) gesteckt und vom Behälterinneren her verschraubt ist. Der Kanal ist mit Gefälle zum Spülbehälter (4) hin oben auf dem Spülbehälter (4) verlegt, so dass evtl. eingedrungenes Spritzwasser frei in den Spülbehälter (4) zurückfließen kann.

Für den normalen Spülbetrieb des Gerätes ohne Temperaturmessung ist der beispielsweise aus Kunststoff gefertigte Sondenkanal (7) wenigstens einendseitig verschließbar ausgebildet. Hierfür ist nach Fig. 2 vorteilhaft ein Gewindestopfen (15) auf das abgewinkelte in den Spülbehälter (4) einmündende Kanalteil (7b) des Sondenkanals (7) aufgeschraubt. Der Gewindestopfen (15) ist vorzugsweise aus Metall gefertigt. Der Metallwerkstoff sichert einen gleichbleibenden Dichtsitz aufgrund seiner Beständigkeit gegen Materialalterung und dergl.

Die zu Messzwecken in den Spülbehälter (4) durch den Sondenkanal (7) eingeführten Messleitungen (9) samt Sonden (10) werden, wie schon erwähnt, nach dem Einführen in den Spülbehälter (4) bei geöffneter Gerätetür (11) gezielt und sicher im Spülbehälter (4) verlegt bzw. können an den Spülguteinsätzen (2, 3) oder auch am Sammeltopf (17) so fixiert werden, dass der Betrieb der Sprüharme (18) nicht gestört wird. Dadurch, dass die Verlegung der Mess-Sondenleitungen (9) nicht durch die Gerätetür (11), sondern separat von dieser außerhalb der Tür- und/oder Spülraumdichtungen erfolgt, kann die Gerätetür (11) beim Schließen auch nicht die Lage der für die Kontrollmessungen installierten Mess-Sondenleitungen (9) verändern. Durch den separat verlegten Sondenkanal (7) werden ferner Deformationen an den Türdichtungen und dergl. verhindert und daraus resultierende Undichtigkeiten des Spülbehälters (4) vermieden.

Die erfindungsgemäße Einrichtung (6) ist selbstverständlich auch bei Geschirrspülmaschinen für den Haushalt einsetzbar und bietet auch hier dem Kundendiensttechniker im Störungsfall des Gerätes eine nützliche Hilfe zur Funktionskontrolle des Gerätes.

## Patentansprüche

1. Einrichtung (6) zur Temperatur-Messkontrolle im Spülbehälter (4) einer Geschirrspülmaschine (1), welche einen oder mehrere Spülguteinsätze (2, 3) oder Geschirrkörbe im türverschließbaren Spülbehälter (4) aufweist,
**dadurch gekennzeichnet,**
**dass** der Spülbehälter (4) mit einem aus dem Gerät herausgeführten separaten Sondenkanal (7) für in den Behälter einschiebbare Mess-Sondenleitungen (9) versehen ist.

2. Einrichtung nach Anspruch 1,
**dadurch gekennzeichnet,**
**dass** der Sondenkanal (7) vorzugsweise von der Frontseite (8) der Geschirrspülmaschine (1) ausgehend oben in den Spülbehälter (4) einmündet.

3. Einrichtung nach Anspruch 2,
**dadurch gekennzeichnet,**
**dass** der von oben in den Spülbehälter (4) einmündende Sondenkanal (7) mit einer im oberen Gerätetürbereich zugänglich angeordneten Messöffnung (12) ausgebildet ist.

4. Einrichtung nach Anspruch 3,
**dadurch gekennzeichnet,**
**dass** die Messöffnung (12) im Gerätetürbereich dicht unterhalb des Gerätedeckels (5) vorgesehen ist.

5. Einrichtung nach Anspruch 3 oder 4,
**dadurch gekennzeichnet,**
**dass** die Messöffnung (12) im Bereich der oberen Türkante (13) der Gerätetür (11) des Spülbehälters (4) vorgesehen ist.

6. Einrichtung nach mindestens einem der Ansprüche 1 bis 5,
**dadurch gekennzeichnet,**
**dass** der Sondenkanal (7) als abgewinkelter Durchführungskanal für die Mess-Sondenleitungen (9) ausgebildet ist.

7. Einrichtung nach mindestens einem der Ansprüche 1 bis 6,
**dadurch gekennzeichnet,**
**dass** der Sondenkanal (7) wenigstens einendseitig verschließbar ausgebildet ist.

8. Einrichtung nach Anspruch 7,
**dadurch gekennzeichnet,**
**dass** der abgewinkelte in den Spülbehälter (4) oben einmündende Kanalteil (7b) des Sondenkanals (7) mit einem Gewindestopfen (15) verschraubbar ist.

9. Einrichtung nach mindestens einem der Ansprüche 1 bis 8,
**dadurch gekennzeichnet,**
**dass** der Sondenkanal (7) im Deckenwandteil (14) des Spülbehälters (4) vorzugsweise lösbar festgesetzt ist.

10. Einrichtung nach mindestens einem der Ansprüche 1 bis 9,
**dadurch gekennzeichnet,**
**dass** der Sondenkanal (7) mit Gefälle zum Spülraum hin geneigt im Gerät angeordnet ist.

11. Einrichtung nach mindestens einem der Ansprüche 1 bis 10,
**dadurch gekennzeichnet,**
**dass** der Sondenkanal (7) in seinem Querschnitt so bemessen ist, dass zur Temperatur-Messkontrolle im Spülbehälter (4) mehrere Mess-Sondenleitungen (9) durch den Kanal in den Spülbehälter (4) einschiebbar sind.

12. Einrichtung nach mindestens einem der Ansprüche 1 bis 11,
**dadurch gekennzeichnet,**
**dass** die einschiebbaren Mess-Sondenleitungen (9) mit den Sonden (10) in unterschiedlichen Höhen im Spülbehälter (4) wiederlösbar festgesetzt sind.

13. Einrichtung nach mindestens einem der Ansprüche 1 bis 12,
**dadurch gekennzeichnet,**
**dass** die Sonden (10) zur Temperatur-Messkontrolle an den Spülguteinsätzen (2, 3) bzw. Geschirrkörben und/oder am Sammeltopf (17) des Spülbehälters (4) fixiert sind.
